(19) Europäisches Patentamt / European Patent Office / Office européen des brevets

(11) **EP 4 458 788 A1**

(12) **EUROPEAN PATENT APPLICATION**
published in accordance with Art. 153(4) EPC

(43) Date of publication:
**06.11.2024 Bulletin 2024/45**

(21) Application number: **22916122.9**

(22) Date of filing: **27.12.2022**

(51) International Patent Classification (IPC):
**C04B 35/488** (2006.01)    **C01G 25/00** (2006.01)
**C01G 25/02** (2006.01)    **C04B 35/48** (2006.01)

(52) Cooperative Patent Classification (CPC):
**C01G 25/00; C01G 25/02; C04B 35/48;
C04B 35/488**

(86) International application number:
**PCT/JP2022/048288**

(87) International publication number:
**WO 2023/127900 (06.07.2023 Gazette 2023/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.12.2021 JP 2021212807**

(71) Applicant: **Tosoh Corporation
Yamaguchi 746-8501 (JP)**

(72) Inventors:
• **KAWAMURA, Kenta
  Shunan-shi, Yamaguchi 746-8501 (JP)**
• **HOSOI, Kohei
  Shunan-shi, Yamaguchi 746-8501 (JP)**
• **NAGAYAMA, Hitoshi
  Shunan-shi, Yamaguchi 746-8501 (JP)**

(74) Representative: **Müller-Boré & Partner
Patentanwälte PartG mbB
Friedenheimer Brücke 21
80639 München (DE)**

(54) **SINTERED BODY, METHOD FOR PRODUCING SINTERED BODY, STARTING MATERIAL POWDER FOR SINTERED BODY, AND CALCINED BODY**

(57) Provided is at least one of a zirconia sintered body, a raw material powder for the zirconia sintered body, a calcined body and a method for producing the sintered body. The zirconia sintered body does not exhibit a color derived from ceria and exhibits high impact resistance. The sintered body comprises zirconia and germanium oxide, the zirconia containing a stabilizing element, wherein Y/X is 0.35 or greater, and X+Y is 4.0 or less, where X is an amount of the stabilizing element in the zirconia expressed in mol%, and Y is an amount of the germanium oxide in the zirconia expressed in mol%.

FIG. 7

1000 μm

EP 4 458 788 A1

**Description**

TECHNICAL FIELD

The present disclosure relates to a sintered body having high impact resistance and including a major phase of zirconia, to a method for producing the sintered body, to a raw material powder for the sintered body and to a calcined body.

BACKGROUND ART

Sintered bodies including a matrix of zirconia are conventionally used as grinding media, structural materials and the like. In addition to these applications, decorative applications are now being considered, which include applications in decorative components for timepieces, mobile electronic devices, automobiles, home appliances and the like. Sintered bodies that are used in decorative applications are required to have high strength and high toughness so as to be prevented from being fractured by an external impact. In the past, various sintered bodies having high strength and high toughness have been reported as highly reliable materials.

Furthermore, in recent years, there have been reports on sintered bodies having not only the features of high strength and high toughness but also improved fracture resistance to impacts that are encountered in more practical situations.

Sintered bodies such as those of zirconia ceramics tend to experience a brittle fracture when a dynamic load that exceeds the fracture resistance of the material is applied. On the other hand, in the case of sintered bodies that experience plastic deformation in association with the application of a load, the plastic deformation absorbs the impact before a brittle fracture occurs, which can inhibit the formation and propagation of cracks, and, therefore, the sintered bodies exhibit high impact resistance.

Patent Document 1 reports on a zirconia-alumina composite sintered body obtained by sintering a powder containing a zirconia powder mixed with an alumina powder, the zirconia powder containing 3.4 to 5.0 mol% ceria and 0.7 to 1.2 mol% yttria. Patent Document 1 states that the sintered body exhibits excellent impact resistance as evidenced by the formation of an impact mark and exhibition of a ball drop strength of 1.2 J or greater in a ball drop test (weight: 300 g, height: 350 mm, sample shape: a plate shape of 40 mm in length, 30 mm in width and 2 mm in thickness).

PRIOR ART DOCUMENTS

PATENT DOCUMENTS

Patent Document 1: JP-A-2021-91601

DISCLOSURE OF INVENTION

TECHNICAL PROBLEM

The sintered body of Patent Document 1 includes ceria. Since ceria exhibits a characteristic color, in instances where the element is used, the resulting sintered bodies have a yellowish color. Accordingly, it is difficult to produce sintered bodies that exhibit an inherent color of zirconia without exhibiting a color derived from ceria.

An object of the present disclosure is to provide at least one of a zirconia sintered body; a method for producing the sintered body; a raw material powder for the sintered body; and a calcined body. The zirconia sintered body does not exhibit a color derived from ceria and, in response to a dynamic impact, exhibits high impact resistance by absorbing the impact by undergoing plastic deformation.

SOLUTION TO PROBLEM

Specifically, the present invention is as described in CLAIMS, and a summary of the present disclosure is as follows.

[1] A sintered body comprising zirconia that contains a stabilizing element; and germanium oxide, wherein Y/X is 0.35 or greater, and X+Y is 4.0 or less, where X is an amount of the stabilizing element in the zirconia expressed in mol%, and Y is an amount of the germanium oxide in the zirconia expressed in mol%.

[2] The sintered body according to [1], wherein when a load is applied to the sintered body, the sintered body undergoes plastic deformation.

[3] The sintered body according to [1] or [2], wherein a content of the germanium oxide is 0.1 mol% or greater and 4.0 mol% or less.

[4] The sintered body according to any one of [1] to [3], wherein the stabilizing element includes at least one selected from the group of yttrium, calcium, magnesium, ytterbium and gadolinium.

[5] The sintered body according to any one of [1] to [4], wherein the content of the stabilizing element is 0.1 mol% or greater and 4.0 mol% or less.

[6] The sintered body according to any one of [1] to [5], wherein a fracture toughness value is 6.0 MPa·m$^{0.5}$ or greater as measured by a method that is in accordance with an SEPB method specified in JIS R 1607.

[7] The sintered body according to any one of [1] to [6], further comprising alumina.

[8] A powder comprising zirconia that contains a stabilizing element; and germanium oxide, wherein regarding the zirconia, Y/X is 0.35 or greater, and X+Y is 4.0 or less, where X is an amount of the stabilizing element in the zirconia expressed in mol%, and Y is an amount of the germanium oxide in the zirconia expressed in mol%.

[9] A calcined body comprising zirconia that contains a stabilizing element; and germanium oxide, wherein regarding the zirconia, Y/X is 0.35 or greater, and X+Y is 4.0 or less, where X is an amount of the stabilizing element in the zirconia expressed in mol%, and Y is an amount of the germanium oxide in the zirconia expressed in mol%.

[10] A method for producing the sintered body according to any one of [1] to [7] comprising sintering the powder according to [8] at a temperature of 1100°C or greater and 1500°C or less for a time of 0.3 hours or more and 20 hours or less.

[11] A component comprising the sintered body according to any one of [1] to [7].

ADVANTAGEOUS EFFECTS OF INVENTION

An object of the present disclosure is to provide at least one of a zirconia sintered body, a raw material powder for the zirconia sintered body, a calcined body thereof and a method for producing the sintered body. The zirconia sintered body does not exhibit a color derived from ceria and, in response to an impact greater than the fracture resistance of the sintered body, exhibits high impact resistance by causing the absorption of the impact to occur before a brittle fracture occurs.

BRIEF DESCRIPTION OF DRAWINGS

[Fig. 1] A schematic diagram illustrating a ball drop test performed with a Dupont impact tester.

[Fig. 2] A schematic diagram illustrating an example of an impacted portion (formation of a depressed portion) resulting from the ball drop test.

[Fig. 3] A schematic diagram illustrating an example of a vicinity of an impacted portion resulting from a ball drop test performed on a sintered body of the related art.

[Fig. 4] A schematic diagram illustrating an exemplary placement of a measurement sample regarding a ball drop test.

[Fig. 5] A schematic diagram illustrating a method for measuring a depth of an impact mark.

[Fig. 6] A schematic diagram illustrating an exemplary form of a fracture associated with the ball drop test; (a) a state in which a fracture has occurred, and (b) a state in which no fracture has occurred.

[Fig. 7] An appearance of a sintered body of Example 2, which is an appearance after the ball drop test (magnification: 20 times, load: 300 g, ball drop height: 50 cm).

DESCRIPTION OF EMBODIMENTS

A sintered body of the present disclosure will be described below with reference to an exemplary embodiment.

A sintered body that can be obtained from a powder of the present embodiment (hereinafter also referred to as a "sintered body of the present embodiment") has a region that undergoes plastic deformation. The region that undergoes plastic deformation may be, for example, a region in which an impact mark is formed in instances in which an impact force is applied. In the present embodiment, the "plastic deformation" is a deformation of the sintered body that results from the application of an external force and which remains in the sintered body after removal of the external force. Accordingly, the plastic deformation differs from deformations that do not remain after the external force is removed (so-called elastic deformations) and from a fracture caused, while the sintered body remains undeformed, by the occurrence and propagation of a defect such as a crack (a so-called brittle fracture). Furthermore, in the present embodiment, the plastic deformation also differs from deformations due to a so-called superplastic phenomenon, which is a phenomenon in which stretching occurs due to sequential occurrences of grain boundary sliding in an instance in which the deformation is caused at a constant strain rate in a high-temperature range (e.g., in a temperature range of 800°C and greater). Presumably, one reason that the sintered body of the present embodiment has ameliorated impact resistance, that is, the sintered body has improved impact resistance, is that the region that undergoes plastic deformation (hereinafter also referred to as a "plastic deformation region"), such as a region in which an impact mark is formed, functions to absorb energy that is transmitted by an applied impact force and disperse the energy. As a result, presumably, in an instance where an impact force is applied, plastic deformation occurs at least before the occurrence of a brittle fracture, and as a result, the occurrence of a brittle fracture is inhibited, which improves the impact resistance.

It is sufficient that the sintered body of the present embodiment include a plastic deformation region in at least a portion of the sintered body (that is, it is sufficient that the sintered body include a plastic deformation region). Alternatively, the sintered body may be formed primarily of a plastic deformation region or may be formed of a plastic deformation region.

The "impact force" is a force that transmits energy to the sintered body and, in particular, refers to a dynamic external force. The impact force is preferably an external force that is greater than the fracture resistance of the sintered body, more preferably a dynamic external force that is greater than the fracture resistance of the sintered body and even more preferably a dynamic external force that imparts elastic energy to the sintered body.

The expression "an impact force is applied" refers to the application of energy to at least a portion of the sintered body. For example, the application of energy may be dynamic application of energy to the sintered body caused by contact of the sintered body with a contact object, such as contact of the sintered body with the ground or the like due to falling of the sintered body or contact of a falling object with the sintered body.

The "impact mark" is a mark resulting from the application of an impact force to the sintered body and is preferably a mark formed in the sintered body by the application of an impact force. In other words, the impact mark is a mark resulting from the occurrence of plastic deformation in the sintered body and a mark of plastic deformation that occurred before the occurrence of a fracture. Specifically, for example, the impact mark may be formed in the impacted portion (described later), and the form of the impact mark may be a depressed portion or a depressed and projected portion, may be a depressed portion or may be a depressed portion formed in the direction in which an impact force was applied.

In the present embodiment, whether the sintered body includes a plastic deformation region can be confirmed by applying an impact force (e.g., a dynamic external force that causes the progression of a fracture in the sintered body) to the sintered body with any method. For example, a confirmation that the sintered body includes a plastic deformation region can be made when it can be confirmed that, after application of an impact force to the sintered body, the sintered body has an impact mark formed therein and that the impact mark is a mark, such as a depressed portion or a depressed and projected portion, that results from the occurrence of plastic deformation (in particular, a mark resulting from deformation that occurs before the occurrence of a fracture). In the sintered body of the present embodiment, the impact mark, which is formed as a result of plastic deformation, may contain a defect attributable to a brittle fracture, such as a crack, that occurs subsequently (after the formation of the impact mark). Note that a determination that the sintered body includes no plastic deformation region can be made in the following instances: an instance in which only a defect attributable to a brittle fracture, such as a crack, is present after the application of an impact force (i.e., an instance in which only a defect that does not involve the formation of an impact mark due to plastic deformation is observed); and an instance in which only a deformation due to a fracture such as a Hertzian fracture is present after the application of an impact force (i.e., an instance in which only a deformation formed by the propagation of a fracture such as a crack that initially occurred is observed).

A preferred method for confirming the presence of the plastic deformation region may be, for example, a ball drop test performed by dropping a drop weight from a specified height at room temperature by using a Dupont impact tester that is in accordance with JIS K 5600 5-3 (hereinafter also referred to simply as a "ball drop test").

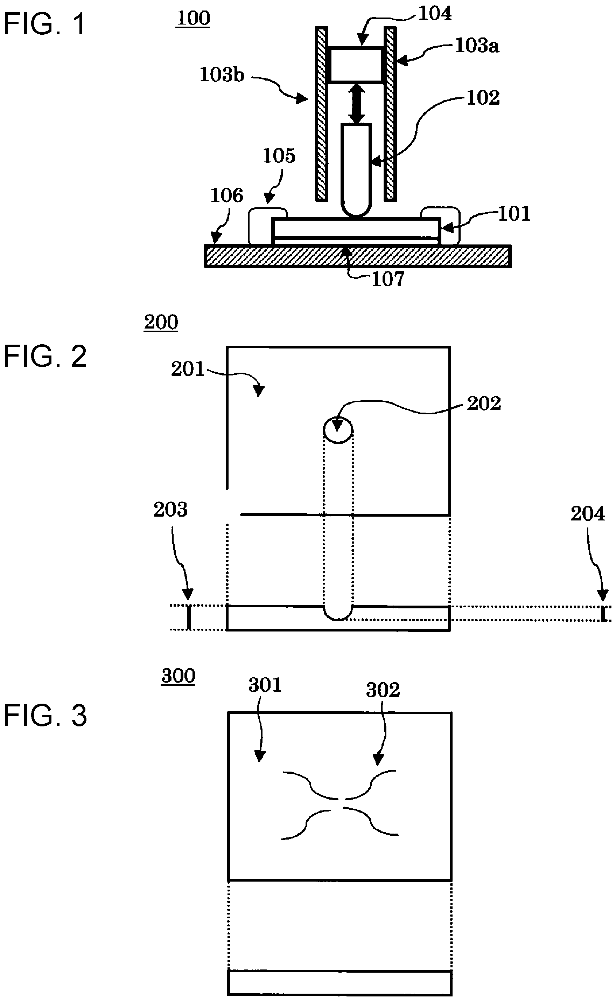

Fig. 1 is a schematic diagram illustrating a ball drop test performed with a Dupont impact tester. As illustrated in Fig. 1, for the ball drop test, a measurement sample (101) is disposed on a sample stage (106) of the cylindrical impact tester, with protective tape (107) attached to a back surface of the measurement sample; the measurement sample is secured on the sample stage by securing tape (105) attached to side surfaces of the measurement sample. The drop weight is made up of a weight (104) and a punch (102). The punch (102) is disposed on a front surface of the measurement sample (101). The ball drop test can be performed by dropping the weight (104) from a height that is equal to a drop height from the punch (in Fig. 1, a height corresponding to the double-headed arrow: 200 mm). The punch (102) has a cylindrical shape with a spherical (hemispherical) tip. By dropping the weight (104) along guides (103a and 103b) of the Dupont impact tester, it is possible to apply a desired impact force to the measurement sample (101) via the punch (102).

Fig. 2 is a schematic diagram illustrating an appearance of the sintered body of the present embodiment, which is an appearance after the ball drop test. As illustrated in Fig. 2, it can be confirmed that the sintered body of the present embodiment has an impact mark formed in the region to which the impact force produced by the drop weight (punch) in the ball drop test was applied (hereinafter, the region is also referred to as an "impacted portion"). In Fig. 2, the impact mark is illustrated as a depressed portion formed in or near the impacted portion, and thus, the presence of a plastic deformation region can be visually confirmed. Note that although not illustrated, a defect attributable to a brittle fracture, such as a crack, may be present in or near the depressed portion. On the other hand, Fig. 3 is a schematic diagram illustrating an appearance of a sintered body of the related art, which is an appearance after a ball drop test. As illustrated in Fig.3, the sintered body of the related art cannot be confirmed to have an impact mark formed in an impacted portion, but a defect attributable to a brittle fracture, such as a crack, is observed therein.

The presence or absence of the plastic deformation region can be verified by at least one of visual observation and observation with an optical microscope or by visual observation. Regarding the observation with an optical microscope, the magnification for the observation may be, for example, 1 to 100 times or preferably 10 to 50 times.

Note that although not illustrated, in the case of sintered bodies of the related art having high fracture toughness, the post-ball-drop-test appearance is not changed from the pre-ball-drop-test appearance, and, therefore, no impact mark can be observed. In contrast, in sintered bodies having a plastic deformation region, plastic deformation occurs before the occurrence of a brittle fracture. Accordingly, in instances where no impact marks can be observed, the ball drop test may be repeatedly performed by increasing the drop height until an impact mark can be observed, so that the formation of an impact mark, such as the formation of a depressed portion, can be confirmed. Such a process may be used to investigate the presence or absence of the plastic deformation region.

In order to evaluate the presence or absence of a plastic deformation region having an impact resistance acceptable for use in decorative components, such as exterior members for timepieces and electronic devices, it is preferable to use, in the present embodiment, a ball drop test involving dropping a 300-g drop weight from a drop height of 200 mm to investigate the presence or absence of a plastic deformation region.

In the present embodiment, the ball drop test may be performed at room temperature (20 to 30°C) with a Dupont impact tester that is in accordance with JIS K 5600 5-3. The conditions for the ball drop test include the following conditions.

Drop weight: (shape) a cylindrical punch having a spherical tip with a radius of 6.35 mm
(mass) 300 g
Ball drop height: 200 mm
Measurement sample: a sintered body having a plate shape of 40 mm in length, 30 mm in width and 2 mm in thickness and having a surface roughness Ra of both surfaces of 0.02 $\mu$m or less

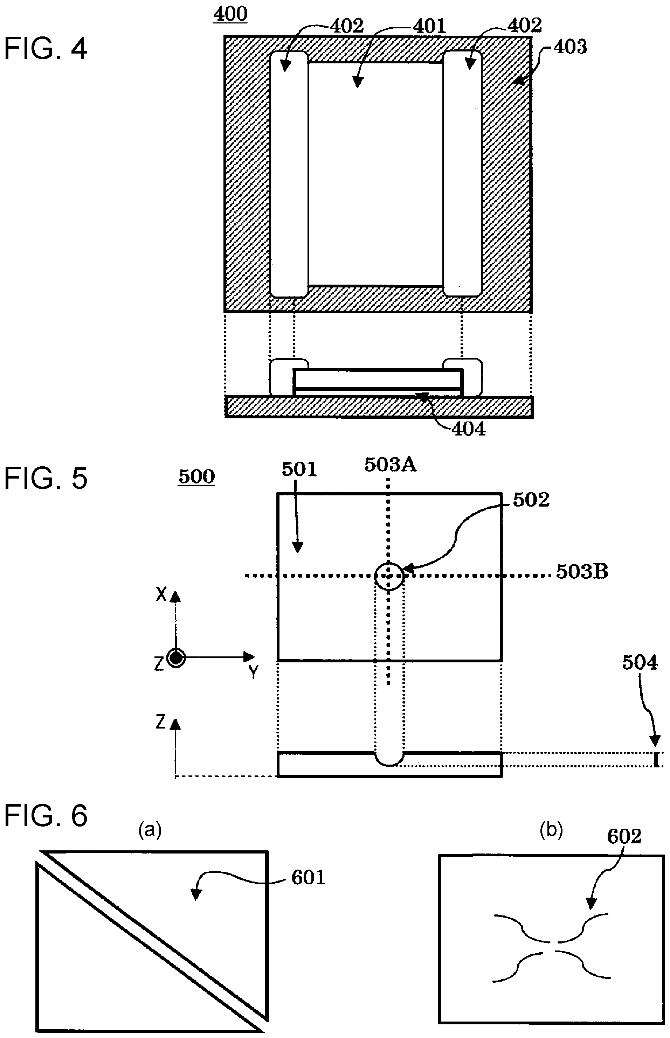

The measurement sample is to be placed such that one of the surfaces of the measurement sample (a major surface that is a surface of 40 mm in length and 30 mm in width) is secured to the sample stage of the impact tester with double-sided tape so that the scattering of pieces of the sample can be prevented. Securing tape (protective tape) is attached along the length of the major surface opposite to the surface onto which the placed measurement sample was secured. In this manner, the measurement sample is secured (Fig. 4). The ball drop test can be performed on the secured measurement sample.

Regarding depths of the impact mark formed as a result of the ball drop test, a depth [mm] (204 in Fig. 2) of the impact mark at the deepest point, relative to a thickness [mm] (203 in Fig. 2) of the sintered body, may be, for example, greater than 0% and 3.5% or less, 0.05% or greater and 3% or less or 0.1% or greater and 3% or less. Note that in Fig. 2, the depth (204) of the impact mark (depressed portion) is illustrated with the depth being exaggerated.

In the present embodiment, the depth of the impact mark can be measured with a common laser microscope (e.g., VK-9500/VK-9510, manufactured by Keyence Corporation) or a contact surface profilometer (e.g., Dektak XTL, manufactured by Bruker). In instances where a laser microscope is used for the measurement, the magnification for the observation may be 10 to 50 times or 20 times, and the laser wavelength may be 408 nm, for example.

Fig. 5 is a schematic diagram illustrating an exemplary method for measuring the depth of the impact mark. The method for measuring the depth of the impact mark is not limited to the method described below. In the present embodiment, the measurement of the depth of the impact mark can be carried out as follows: an X-axis direction (503A) is defined as a direction of a maximum diameter of the impact mark that is formed and has a generally circular shape as viewed from above a plane on which the weight dropped; a Y-axis direction (503B) is defined as a direction orthogonal to the X-axis direction and extending in the plane on which the weight dropped; a line profile is obtained individually for the X-axis direction and the Y-axis direction; and a depth (504) of the impact mark is measured, the depth being a difference between the height of the plane on which weight dropped and the height of the surface of the impact mark, as defined with respect to a Z-axis direction, which is orthogonal to the X-axis and the Y-axis. A maximum depth measured in the X-axis direction is designated as L1, a maximum depth measured in the Y-axis direction is designated as L2, and the maximum depths are averaged (= (L1 + L2)/2). The obtained length is designated as the depth of the impact mark of the sample. Regarding the measurement of the length of the deepest point, a measurement condition may be, for example, 0.5 $\mu$m/step. Before the measurement, analysis precision can be adjusted by measuring a standard sample (e.g., a patterned Si substrate) that is provided along with the instrument and has a known pattern length.

These analyses, including the measurements of the line profile and the deepest point in the Z-axis direction, can be carried out by performing image analysis with analysis software or the like accompanying the laser microscope (e.g., VK-H1A9VK Analyzer Version 3.0.1.0 (name of software)).

The sintered body of the present embodiment comprises zirconia and germanium oxide, and the zirconia contains a stabilizing element. Y/X is 0.35 or greater, and X+Y is 4.0 or less, where X is an amount of the stabilizing element in the zirconia expressed in mol%, and Y is an amount of the germanium oxide in the zirconia expressed in mol%.

The sintered body of the present embodiment is a sintered body comprising zirconia that contains a stabilizing element and is a so-called zirconia sintered body in which zirconia that contains a stabilizing element is present as a major phase.

The stabilizing element has a function of stabilizing zirconia and may be at least one selected from the group of calcium (Ca), magnesium (Mg), scandium (Sc), yttrium (Y), gadolinium (Gd), ytterbium (Yb) and dysprosium (Dy). The stabilizing element is preferably at least one selected from the group of calcium (Ca), magnesium (Mg), yttrium (Y), gadolinium (Gd) and ytterbium (Yb) and more preferably at least one selected from the group of yttrium (Y) and gadolinium (Gd).

A content of the stabilizing element (hereinafter also referred to as an "amount of the stabilizing element") may be any amount sufficient to partially stabilize the zirconia. Preferably, the amount of the stabilizing element is 0.1 mol% or greater, 0.2 mol% or greater, 0.25 mol% or greater or 0.5 mol% or greater and is 4.0 mol% or less, 3.5 mol% or less, 3.0 mol% or less or less than 3.0 mol%, on an oxide basis. In the present embodiment, the amount of the stabilizing element is a ratio (mol%) of a total amount of one or more stabilizing elements on an oxide basis to the sum of the amount of the zirconia, the amount of the one or more stabilizing elements on an oxide basis and the amount of the germanium oxide.

The sintered body of the present embodiment contains germanium oxide. The germanium oxide ($GeO_2$) need not be dissolved in the zirconia, or at least a portion of the germanium oxide may be dissolved in the zirconia. The amount of the germanium oxide may be 0.1 mol%, 0.3 mol% or greater or 0.5 mol% or greater and may be 4.0 mol% or less, 3.5 mol% or less, 3.0 mol% or less or less than 3.0 mol%, on an oxide ($GeO_2$) basis. In the present embodiment, the amount of the germanium oxide is a ratio (mol%) of a total amount of the germanium oxide to the sum of the amount of the zirconia, the amount of the one or more stabilizing elements on an oxide basis and the amount of the germanium oxide.

The Y/X of the sintered body of the present embodiment is 0.35 or greater or is preferably 0.45 or greater or 0.5 or greater. The Y/X may be 4.0 or less or 3.0 or less. Any combination of these upper and lower limits is possible.

The X+Y of the sintered body of the present embodiment is 4.0 or less or is preferably 3.5 or less or 3.0 or less. The X+Y may be 0.5 or greater or 1.0 or greater. Any combination of these upper and lower limits is possible.

The sintered body of the present embodiment may comprise alumina ($Al_2O_3$). Since the sintered body of the present embodiment need not comprise alumina, the alumina content is 0 mass% or greater. In instances where alumina is included, the alumina content may be greater than 0 mass% and less than 30 mass%. The alumina content is preferably greater than 0 mass% and 25 mass% or less and more preferably 0.005 mass% or greater and 20 mass% or less. The alumina content may be 0 mass% or greater, greater than 0 mass%, 0.005 mass% or greater, 0.05 mass% or greater or 0.25 mass% or greater and may be 30 mass% or less, 25 mass% or less or 20 mass% or less. Any combination of these upper and lower limits is possible. In terms of ease with which a light transmissive property can be imparted to the sintered body of the present embodiment, it is preferable that the sintered body not contain alumina. On the other hand, from the standpoint of ease with which a dense sintered body can be produced even at a relatively low temperature, it is preferable that the alumina content be 0.05 mass% or greater, and in terms of a tendency for the sintered body of the present embodiment to have enhanced mechanical properties, with the mechanical properties including a static strength, it is preferable that the alumina content be 30 mass% or less. The alumina content is a mass ratio of the amount of aluminum on an $Al_2O_3$ basis to the sum of the amount of the zirconia, the amount of the one or more stabilizing elements on an oxide basis, the amount of the germanium oxide and the amount of aluminum on an $Al_2O_3$ basis.

The sintered body of the present embodiment may include a pigment component. The pigment component that may be included in the sintered body is a component that has a function of coloring the sintered body. Thus, the sintered body can exhibit a desired color different from an inherent color of zirconia. The pigment component that may be included in the sintered body of the present embodiment is at least one of an element and a compound thereof that have a function of coloring zirconia. The pigment component may be, for example, a compound containing a rare earth metal or containing a metal element. Preferably, the pigment component is a transition metal element or a compound containing a transition metal element. Specifically, more preferably, the pigment component is an element or a compound, where the element is at least one selected from the group of vanadium (V) chromium (Cr), manganese (Mn), iron (Fe), cobalt (Co), nickel (Ni), copper (Cu) and zinc (Zn), and the compound contains at least one of the elements; even more preferably, the pigment component is an oxide containing at least one element selected from the group of manganese, iron, cobalt, nickel and zinc. The inclusion of the pigment component can be achieved, for example, by mixing a powder of a pigment with a zirconia powder and sintering the mixture; in this manner, a coloring element or a compound containing the coloring element, which is derived from the pigment powder, can be included as the pigment component into the zirconia sintered body.

In the sintered body of the present embodiment, the pigment component may be present in any form. The pigment component may be present as particles (second phase particles) or may be dissolved in the zirconia.

The sintered body of the present embodiment is more likely to exhibit plastic deformation with smaller contents of the pigment component. The content of the pigment component may be greater than 0 mass% and preferably 0.001 mass% or greater. The content of the pigment component is not limited as long as the sintered body includes the plastic deformation region. The content of the pigment component may be, for example, 10 mass% or less, less than 7.5 mass%, 5.0 mass% or less, 3.5 mass% or less or 3.0 mass% or less. Any combination of these upper and lower limits is possible. The content of the pigment component can be determined as a ratio of the total mass of one or more pigment components on an oxide basis to the mass of the sintered body of the present embodiment. Regarding the calculation of the content of the pigment component on an oxide basis, the oxides may be $Co_3O_4$ for cobalt, $Fe_2O_3$ for iron, $Mn_3O_4$ for manganese and NiO for nickel, for example. In instances where pigment components are in the form of a composite oxide, the content of the pigment components can be determined as the ratio of the total mass of the pigment components on the composite-oxide-basis to the mass of the sintered body of the present embodiment.

In instances where, for example, the sintered body of the present embodiment is a zirconia sintered body containing, as pigment components, a composite oxide represented by $ABO_3$ and $AB_2O_4$, containing germanium oxide and alumina and containing, as stabilizing elements, yttrium and gadolinium, the content of each of the components can be determined as follows.

Amount [mass%] of pigment components = $\{(ABO_3 + AB_2O_4)/(Y_2O_3 + Gd_2O_3 + ZrO_2 + Al_2O_3 + GeO_2 + ABO_3 + AB_2O_4)\} \times 100$

Amount [mass%] of alumina = $\{Al_2O_3/(Y_2O_3 + Gd_2O_3 + ZrO_2 + Al_2O_3 + GeO_2 + ABO_3 + AB_2O_4)\} \times 100$

$$\text{Germanium oxide [mol\%]} = \{GeO_2/(GeO_2 + Y_2O_3 + Gd_2O_3 + ZrO_2)\} \times 100$$

Amount [mol%] of stabilizing element = $\{(Y_2O_3 + Gd_2O_3)/Y_2O_3 + Gd_2O_3 + ZrO_2)\} \times 100$

$$\text{Amount [mol\%] of yttrium} = \{(Y_2O_3)/Y_2O_3 + Gd_2O_3 + ZrO_2)\} \times 100$$

$$\text{Amount [mol\%] of gadolinium} = \{(Gd_2O_3)/Y_2O_3 + Gd_2O_3 + ZrO_2)\} \times 100$$

Preferably, the sintered body of the present embodiment does not contain any other components except for incidental impurities. Examples of the incidental impurities include hafnia ($HfO_2$). In the present embodiment, when values related to a composition, such as a density, are to be calculated, hafnia can be regarded as zirconia ($ZrO_2$).

In instances where the sintered body of the present embodiment includes no pigment component, a color of the sintered body is preferably white, and thus, a lightness value L* of the color, according to the CIE1976 (L*, a*, b*) color space, is preferably 70 or greater, 75 or greater or 80 or greater and more preferably 80 or greater. Furthermore, a color saturation C* can be determined according to the following equation.

$$C^* = \{(a^*)^2 + (b^*)^2\}^{0.5}$$

In instances where the sintered body of the present embodiment includes no pigment component, the color saturation C* of the sintered body is preferably less than 10.0, less than 9.0 or less than 8.0 and more preferably less than 8.0. Any combination of these upper and lower limits is possible.

In the instance where the sintered body of the present embodiment includes a pigment component, the sintered body may have any color, and preferably, the color has an L* value of 0 or greater and 95 or less, an a* value of -15 or greater and 15 or less and a b* value of -30 or greater and 40 or less, according to the CIE1976 (L*, a*, b*) color space.

The lightness value L* and the chrominance values a* and b* can be measured by a method that is in accordance with JIS Z 8722, using a common spectral colorimeter (e.g., CM-700d, manufactured by Konica Minolta Japan, Inc.). Measurement conditions for the lightness value L* and the chrominance values a* and b* include the following conditions. Preferably, the measurement is a measurement that uses a black plate as the background (a so-called black background measurement).

Light source: D-65 light source
Viewing angle: 10°
Measurement mode: SCI

The measurement sample to be used may be a sintered body having a disc shape with a diameter of 20 mm and a thickness of 1.8 mm. The surface to be evaluated may be mirror-polished (Ra ≤ 0.02 μm) for the evaluation of the color. An effective area for evaluating the color may be an area with a diameter of 10 mm.

Preferably, the sintered body of the present embodiment has a high density. More preferably, the density is a density equivalent to a relative density of 98% or greater, preferably 99% or greater, and 100% or less.

In the present embodiment, a measured density can be determined by an Archimedes method and is a value determined as a mass, which is determined by a mass measurement, to a volume determined by the Archimedes method. Furthermore, in the present embodiment, the relative density can be determined from a ratio of the measured density to a theoretical density.

The zirconia included in the sintered body of the present embodiment is formed primarily of a tetragonal phase. As used herein, the expression "zirconia is formed primarily of a tetragonal phase" means that a tetragonal phase is present in an amount of 50 vol.% or greater based on a total volume of the crystalline phases of the zirconia. In the sintered body of the present embodiment, a tetragonal phase is present in an amount of 50 vol.% or greater, preferably 60 vol.% or greater, based on the total volume of the crystalline phases of the zirconia. Furthermore, the zirconia included in the sintered body of the present embodiment may include at least one of a cubic phase and a monoclinic phase.

A tetragonal phase fraction is a proportion of tetragonal zirconia in the crystalline phases of the zirconia. The tetragonal phase fraction can be determined by using a powder X-ray diffraction pattern and according to the following equation.

$$f_t = I_t(111)/[I_m(111) + I_m(11\text{-}1) + I_t(111) + I_c(111)] \times 100$$

In the equation, $f_t$ is the tetragonal phase fraction (%), $I_m(111)$ and $I_m(11\text{-}1)$ are integrated intensities of XRD peaks corresponding respectively to a (111) plane and a (11-1) plane of monoclinic zirconia, $I_t(111)$ is an integrated intensity of an XRD peak corresponding to a (111) plane of tetragonal zirconia and $I_c(111)$ is an integrated intensity of an XRD peak corresponding to a (111) plane of cubic zirconia.

In the present embodiment, the powder X-ray diffraction pattern of the sintered body can be measured with a common crystallinity analysis X-ray diffractometer (e.g., X'pert PRO MPD (instrument name), manufactured by Spectris Co., Ltd.).

The measurement conditions include the following conditions.

Radiation source: CuKα radiation (λ=1.5418 Å)
Measurement mode: continuous scanning
Scan speed: 4°/minute
Step width: 0.02°
Measurement range: 2θ=26° to 33°
Tube voltage: 40 kV
Tube current: 40 mA
High-speed detector: X'Celerator+Ni filter

The sintered body of the present embodiment may have at least one shape selected from the group of, for example, spherical shapes, generally spherical shapes, elliptical shapes, disc shapes, cylindrical shapes, cubic shapes, rectangular parallelepiped shapes, polyhedral shapes and generally polyhedral shapes. The shape may be any shape for achieving intended purposes, including various applications.

Preferably, the sintered body of the present embodiment has a ball drop strength of 0.5 J or greater or 0.6 J or greater. The ball drop strength is one of the indices that indicate impact resistance, and the higher the value, the higher the impact resistance. The ball drop strength of the sintered body may be, for example, 10 J or less, 7 J or less or 5 J or less. Any combination of these upper and lower limits is possible.

Ball drop strength (J) = mass (g) of drop weight $\times$ drop height (mm) $\times$ acceleration of gravity (m/s$^2$)

An acceleration of gravity of 9.8 m/s$^2$ can be used.

The ball drop strength can be measured in a manner similar to that of the ball drop test described above, except that the ball drop height may be a height selected within the range described below.

Ball drop height: 50 to 500 mm

Regarding the determination of a fracture, when the measurement sample has broken into two or more pieces, it can be assumed that a fracture has occurred (Fig. 6(a)). On the other hand, when a crack not extending from one end to another end has formed (Fig. 6(b)), it can be assumed that no fracture has occurred. In an instance where no fracture occurs in a ball drop test at a specific drop height, the ball drop test may be repeatedly performed until a fracture occurs, by increasing the drop height with constant increments (e.g., increments of 50 mm) until the drop height becomes 500 mm, and then visual observation may be similarly performed. Alternatively, the ball drop test may be repeatedly performed by changing the weight of the drop weight rather than changing the ball drop height. For example, in an instance where no fracture has occurred even when the ball drop height has reached 500 mm, the mass of the drop weight may be changed from 300 g to 500 g, and then the ball drop test may be performed again at the drop height of 500 mm. In this case, higher ball drop strengths can be measured.

An exemplary index for indicating the fracture resistance of the sintered body of the present embodiment is a fracture toughness value. For example, the fracture toughness value (MPa·m$^{0.5}$) of the sintered body of the present embodiment may be 5.0 MPa·m$^{0.5}$ or greater or 6.0 MPa·m$^{0.5}$ or greater and may be 20.0 MPa·m$^{0.5}$ or less or 18.0 MPa·m$^{0.5}$ or less, as measured by an SEPB method specified in JIS R 1607.

In the present embodiment, a flexural strength may be measured in a 3-point bending test that is in accordance with JIS R 1601. The flexural strength of the sintered body of the present embodiment is preferably 100 MPa or greater and more preferably 300 MPa or greater. Furthermore, the flexural strength of the sintered body of the present embodiment may be, for example, 1800 MPa or less or 1600 MPa or less.

The sintered body of the present embodiment can be used in conventional applications of sintered bodies, particularly, applications of zirconia sintered bodies, such as those for structural materials, optical materials and dental materials. Further, the sintered body can be used as a component that is required to have a relatively high impact resistance, and examples of the component include decorative items, covers for an accessory, such as a timepiece or a casing, and exterior members of a mobile electronic device, such as a mobile phone.

Now, a method for producing the sintered body of the present embodiment will be described.

Any method may be used to produce the sintered body of the present embodiment as long as the produced sintered body has the characteristics described above. An exemplary method for producing the sintered body of the present embodiment is a production method including a step of sintering a powder that contains a stabilizing element source, zirconia and a germanium source (hereinafter, the powder is also referred to as a "raw material composition"). The powder may be in any form when it is subjected to the mentioned step (hereinafter also referred to as a "sintering step"). For example, the powder may be formed into a green body (green compact) before being subjected to sintering.

The stabilizing element source is at least one of an oxide of the stabilizing element and a stabilizing-element-containing compound that serves as a precursor of an oxide of the stabilizing element. The stabilizing element source may be, for example, at least one selected from the group of oxides, hydroxides, oxychlorides, chlorides, acetic acid salts, nitric acid salts and sulfuric acid salts that serve as precursors of an oxide of the stabilizing element. Preferably, the stabilizing element source is at least one of a chloride and a nitric acid salt. (Hereinafter, when the stabilizing element is yttrium or gadolinium, the stabilizing element source may be individually referred to as an yttrium source or a gatolinium source.) The content of the stabilizing element source in the raw material composition may be an amount equivalent to the amount of the stabilizing element of the target sintered body.

The yttrium source is at least one of yttria (yttrium oxide, $Y_2O_3$) and an yttrium compound that serves as a precursor of yttria. The yttrium source may be at least one selected from the group of yttrium chloride, yttria and yttrium carbonate and may preferably be yttrium chloride.

The gadolinium source is at least one of gadolinia (gadolinium oxide) and a gadolinium compound that serves as a precursor of gadolinia. The gadolinium source may be at least one selected from the group of gadolinium chloride, gadolinia and gadolinium carbonate and may preferably be gadolinium chloride.

The germanium source is at least one of germanium oxide and a compound that serves as a precursor of germanium oxide. The germanium source may be, for example, at least one selected from the group of hydroxides, chlorides, alkoxides, nitric acid salts and sulfuric acid salts of germanium that serve as precursors of germanium oxide and may preferably be at least one selected from the group of germanium oxide, and chlorides and alkoxides of germanium that serve as precursors of germanium oxide. The content of the germanium source in the raw material composition may be an amount equivalent to the amount of the stabilizing element of the target sintered body.

The raw material composition may include an alumina source. The alumina source is at least one of alumina ($Al_2O_3$) and an aluminum (Al)-containing compound that serves as a precursor of alumina. The alumina source may be at least one selected from the group of aluminum chloride, aluminum sulfate, aluminum nitrate, aluminum hydroxide, alumina sols and alumina and may preferably be alumina. The content of the alumina source in the raw material composition may be an amount equivalent to the alumina content of the target sintered body.

The zirconia may be zirconium oxide ($ZrO_2$) or a stabilizing-element-containing zirconia, which contains a stabilizing element. Examples of the stabilizing-element-containing zirconia include yttrium-stabilized zirconias. In the instance where a stabilizing-element-containing zirconia is to be used, any method may be used to include the stabilizing element into the zirconia. For example, a hydrated zirconia sol may be mixed with a stabilizing element source in an amount equivalent to the target content of the stabilizing element, and the mixture may be dried, calcined and washed.

The zirconia may be a germanium oxide-containing stabilized zirconia that contains germanium oxide and a stabilizing element. Examples of the germanium oxide-containing stabilized zirconia include germanium oxide-containing yttrium-stabilized zirconias. In the instance where a germanium oxide-containing stabilized zirconia is to be used, any method may be used to include the germanium oxide into the zirconia. For example, in one method, a hydrated zirconia sol may be mixed with a stabilizing element source and a germanium source, and the mixture may be dried, calcined and washed; and in another method, a hydrated zirconia sol may be mixed with a stabilizing element source, the mixture may be dried and calcined, and subsequently, a germanium source may be mixed with the mixture, which may then be calcined.

The mixing may be carried out by any method. The method is preferably at least one of dry mixing and wet mixing, more preferably wet mixing and even more preferably wet mixing that uses a ball mill.

The method for producing the sintered body of the present embodiment may include a step of compacting the raw material composition to give a green body (green compact) (hereinafter, the step is also referred to as a "molding step").

Any method may be used to produce the green body. For example, zirconia, a stabilizing element source, a germanium source and, if necessary, one or more additives, such as an alumina source, are mixed together and compacted in any manner.

The green body may include a binding agent so as to have improved shape stability. The binding agent may be any organic binder for use in the compaction of a ceramic and may be, for example, at least one selected from the group of acrylic resins, polyolefin resins, waxes and plasticizing agents. Regarding the content of the binding agent, a ratio of the binding agent in a volume of the green body may be, for example, 25 vol.% or greater and 65 vol.% or less at room temperature. Furthermore, the binding agent may be present in an amount of, for example, greater than 0 mass% and 10 mass% or less based on a total mass of the green body.

The green body may have any shape that suits a purpose and which is selected with shrinkage due to sintering taken into account. The shape may be, for example, at least one selected from the group of spherical shapes, generally spherical shapes, elliptical shapes, disc shapes, cylindrical shapes, cubic shapes, rectangular parallelepiped shapes, polyhedral shapes and generally polyhedral shapes.

The compaction may be carried out by a compaction method known in the art that can form a green compact from a mixed powder. Preferably, the compaction method is at least one selected from the group of uniaxial pressing, isostatic pressing, injection molding, extrusion, tumbling granulation, slip casting and casing. The compaction method is preferably at least one of uniaxial pressing and isostatic pressing, more preferably at least one of cold isostatic pressing and uniaxial pressing (powder pressing) and even more preferably uniaxial pressing followed by cold isostatic pressing.

An additional step of calcinating a green body before sintering, to give a calcined body, may be provided (hereinafter, the step is also referred to as a "calcination step"). Calcinating the green body can remove a binder from the green body.

The calcination step may be performed under any conditions as long as the sintered body of the present embodiment can be obtained. For example, the sintering may be carried out by performing a heat treatment in air at a temperature of 400°C or greater and less than 1100°C.

The sintering step is a step of sintering the green body to give a sintered body. Any sintering method may be used as long as the method enables sintering to proceed. Examples of the method include sintering methods known in the art, such as pressureless sintering, pressure sintering and vacuum sintering. Preferably, the sintering method is pressureless sintering. Since pressureless sintering is easy, the sintering method may preferably use only pressureless sintering. In this case, the resulting sintered body of the present embodiment can be a so-called pressureless sintered body. Pressureless sintering is a method of sintering that is carried out simply by heating the green body (or calcined body) for sintering, without applying an external force. Note that during the process of sintering, the composition of the germanium oxide-containing stabilized zirconia does not change. That is, it can be assumed that the powder of the germanium oxide-containing stabilized zirconia, the calcined body of the germanium oxide-containing stabilized zirconia and the sintered body of the germanium oxide-containing stabilized zirconia have the same composition.

Regarding the conditions for the pressureless sintering, examples of a sintering temperature include 1050°C or greater and 1600°C or less. Preferably, the sintering temperature may be, for example, 1100°C or greater and 1550°C or less, 1100°C or greater and 1500°C or less or 1150°C or greater and 1500°C or less. Furthermore, a sintering atmosphere may be at least one of an air atmosphere and an oxygen atmosphere and may preferably be an air atmosphere. A heating rate may be, for example, 20°C/hour or greater and 5000°C/hour or less. A sintering time may be appropriately set in accordance with the amount and size of the material that is to be sintered and the features of the sintering furnace. By way of example, the material may be held at any of the above-mentioned sintering temperatures for a time of 0.3 hours or more and 20 hours or less, a time of 0.5 hours or more and 20 hours or less or a time of 0.5 hours or more and 15 hours or less.

The zirconia that is used in the method for producing the sintered body of the present embodiment may be produced by any method. An exemplary method for producing the zirconia is a production method including a step of preparing a calcined powder and a step of grinding the calcined powder. The calcined powder is prepared by heat-treating a composition containing a zirconia sol and a stabilizing element source at a temperature of 600°C or greater and 1250°C or less. The zirconia sol contains crystalline zirconia that includes a major phase of monoclinic zirconia.

The production method will be described in detail below. It is to be noted that the method for producing the zirconia of the present embodiment is not limited to the production method that is described below.

The zirconia sol containing crystalline zirconia that includes a major phase of monoclinic zirconia may be produced by any method. The method may be, for example, at least one of a hydrothermal synthesis method and a hydrolysis method. In the hydrothermal synthesis method, the zirconia sol can be prepared by heat-treating, at a temperature of 100 to 200°C, a coprecipitate obtained by mixing a zirconium salt with an alkali or the like in the presence of a solvent. In the hydrolysis method, the zirconia sol can be prepared by heating a zirconium salt in the presence of a solvent, thereby hydrolyzing the zirconium salt. As described, the zirconia sol may be, for example, a zirconia sol prepared by a hydrothermal synthesis method or a hydrolysis method, and preferably, the zirconia sol is a zirconia sol prepared by a hydrolysis method. A precursor that is used in the method for producing the zirconia sol may be a zirconium salt. The zirconium salt may be, for example, at least one selected from the group of zirconium oxychloride, zirconium nitrate, zirconium chloride and zirconium sulfate. The zirconium salt is preferably at least one of zirconium nitrate and zirconium oxychloride and more preferably zirconium oxychloride.

With the step of preparing a calcined powder (hereinafter also referred to as a "powder calcination step"), in which a composition (a zirconia raw material composition) containing a zirconia sol that contains zirconia that includes a major phase of monoclinic zirconia and containing a stabilizing element source is heat-treated at a temperature of 600°C or greater and 1250°C or less, it is possible to prepare the calcined powder, which is a precursor of the powder of the zirconia.

In the powder calcination step, the heat treatment is performed at a temperature of 500°C or greater and 1250°C or less or at a temperature of 600°C or greater and 1250°C or less. When the temperature for the heat treatment is 600°C or greater, a powder that can be easily densified by pressureless sintering can be obtained. When the temperature for the heat treatment is 1250°C or less, a powder that can be easily dispersed by grinding can be readily obtained. The time of the heat treatment may be appropriately varied in accordance with the heat treatment temperature, the amount of the zirconia raw material composition that is to be treated and the characteristics of the heat treatment furnace. An example of the time is 30 minutes or more and 6 hours or less. The heating rate for achieving the heat treatment temperature has little influence on the resulting calcined powder. By way of example, the heating rate may be 50°C/hour or greater and 1000°C/hour or less.

The atmosphere for the heat treatment may be any atmosphere and, for example, may be one selected from the group of oxidizing atmospheres, reducing atmospheres, inert atmospheres and vacuum atmospheres. The atmosphere is preferably an oxidizing atmosphere and more preferably an air atmosphere.

The zirconia raw material composition that is subjected to the powder calcination step may be any composition that contains a zirconia sol and a stabilizing element source, as described above. All or a portion of the stabilizing element source may be dissolved in the zirconia sol. The dissolution of at least a portion of the stabilizing element source can be facilitated, for example, by a method involving mixing a zirconium salt with the stabilizing element source to cause hydrolysis or a method involving mixing a zirconium salt, a stabilizing element source, an alkaline and the like together to yield a coprecipitate.

In the grinding step, the calcined powder is subjected to a grinding process. Zirconia in which the content of the stabilizing element is low tends to exhibit cracking, chipping and/or the like during sintering. The grinding process of the calcined powder can be performed to address this and tends to increase a sintering yield.

The grinding may be carried out by any method, and the method may be at least one of wet grinding and dry grinding. The method is preferably wet grinding, preferably wet grinding that uses an aqueous dispersion medium having a pH of < 7.0 (i.e., being acidic) and more preferably wet grinding that uses an aqueous dispersion medium having a pH of < 5.0. Specifically, the wet grinding may be, for example, at least one selected from the group of wet grinding in a ball mill and wet grinding in a continuous medium stirring mill. Wet grinding in a ball mill is preferable.

The powder that is subjected to the grinding step may be the calcined powder or a mixed powder containing the calcined powder, a germanium source and an alumina source. Examples of the germanium source include the germanium sources previously mentioned, and examples of the alumina source include the alumina sources previously mentioned.

The conditions for the grinding in a ball mill are, for example, as follows. The calcined powder is mixed with a solvent (e.g., at least one of water and an alcohol, or water) to form a slurry in which a mass ratio of the calcined powder is 30 mass% or greater and 60 mass% or less based on the mass of the slurry, and the slurry is ground with zirconia balls having a diameter of 0.5 mm or greater and 15 mm or less being used as grinding media. The time of the grinding may be appropriately adjusted in accordance with the amount of the calcined powder that is processed. The time is, for example, 8 hours or more and 100 hours or less.

After the wet grinding, drying is performed by any method to give a zirconia powder. The conditions for the drying may include, for example, an air atmosphere and a temperature of 110°C to 130°C.

The method for producing the powder may include a step of granulating the powder (hereinafter also referred to as a "granulation step") in order to improve the handling of the powder. The granulation may be carried out by any method. Examples of the method include spray-granulating a slurry obtained by mixing the powder with a solvent. The solvent is at least one of water and an alcohol and is preferably water. The granulated powder (hereinafter also referred to as "powder granules") may have an average granule size of 30 $\mu$m or greater and 80 $\mu$m or less or 50 $\mu$m or greater and 60 $\mu$m or less and a bulk density of 1.00 g/cm$^3$ or greater and 1.50 g/cm$^3$ or less or 1.10 g/cm$^3$ or greater and 1.45 g/cm$^3$ or less.

EXAMPLES

The present embodiment will now be described with reference to Examples. Note that the present embodiment is not limited to the Examples.

(Confirmation of Plastic Deformation Region)

The presence or absence of the plastic deformation region of a sintered body sample was investigated in a ball drop test that used a Dupont impact tester (H-50 (instrument name), manufactured by Toyo Seiki Seisaku-sho, Ltd.), which is in accordance with JIS K 5600 5-3. The test conditions are shown below.

Drop weight: (shape) a cylindrical punch having a spherical tip with a radius of 6.35 mm
(mass) 300 g, specifically, a weight with a mass of 300 g, made of SUS and having a rectangular parallelepiped shape of 80 mm in width, 20 mm in thickness and 30 mm in height
Ball drop height: 200 mm
Measurement sample: a sintered body having a plate shape of 40 mm in length, 30 mm in width and 2 mm in thickness and having a surface roughness Ra of both surfaces (major surfaces that were surfaces of 40 mm in length and 30 mm in width) of ≤ 0.02 $\mu$m

The measurement sample was placed such that one of the surfaces of the measurement sample (a surface of 40 mm in length and 30 mm in width) was secured to the sample stage of the impact tester with double-sided tape so that the scattering of pieces of the sample could be prevented. Tape was attached along the length of the surface opposite to the surface onto which the placed measurement sample was secured. The punch was positioned such that the drop weight could drop onto a center or a region near the center of the secured measurement sample, and then, a ball drop test was performed.

(Measurement of Ball Drop Strength)

The ball drop strength was measured in a manner similar to that of the ball drop test performed for the confirmation of the plastic deformation region, except that the ball drop height was changed. Specifically, the state of the measurement sample after the drop weight was dropped was visually inspected, and the ball drop strength at the ball drop height at which a fracture occurred in the measurement sample was determined according to the following equation.

Ball drop strength (J) = mass (g) of drop weight $\times$ drop height (mm) $\times$ acceleration of gravity (9.8 m/s$^2$)

Regarding the determination of a fracture, when the measurement sample had broken into two or more pieces, it was assumed that a fracture had occurred. In an instance where very small fragments, such as chips, were generated, and the measurement sample maintained its plate shape, it was not assumed that a fracture had occurred. In instances where no fracture occurred in the ball drop test at the specific drop height, the ball drop test was repeatedly performed until a fracture occurred, by increasing the drop height from 50 mm with increments of 50 mm until the drop height became 500 mm. In instances where no fracture had occurred even when the ball drop height reached 500 mm, the mass of the drop weight was changed from 300 g to 500 g and from 500 g to 1 kg, and then, the ball drop test was performed again at the drop height of 500 mm. In instances where no fracture occurred at the mass of the drop weight of 1 kg and the drop height of 500 mm in the ball drop test, the measurement sample was assumed, for convenience, to have a ball drop strength of > 5J (greater than 5 J).

(Density)

The measured density of the sintered body sample was determined as the ratio ($g/cm^3$) of the volume measured by an Archimedes method to the mass measured by a mass measurement. Before the measurement, the mass of the dried sintered body was measured, and subsequently, a pretreatment was performed in which the sintered body was placed in water and boiled for 1 hour. The theoretical density ($g/cm^3$) was determined by determining the unit cell mass (g) of the zirconia per unit cell volume ($cm^3$) thereof, assuming that all the crystalline phases of the zirconia in the sintered body were tetragonal.

(Fracture Toughness)

The fracture toughness value of the sintered body sample was measured with a method that is in accordance with the SEPB method specified in JIS R 1607.

(Flexural Strength)

The flexural strength of the sintered body sample was measured in a 3-point bending test that is in accordance with JIS R 1601.

(Measurement of Color)

The color of the sintered body sample was measured with a method that is in accordance with JIS Z 8722. The measurement was carried out with a common spectral colorimeter (CM-700d (instrument name), manufactured by Konica Minolta Japan, Inc.). The measurement was a black background measurement that used a black plate as the background. The measurement conditions were as follows.
Light source: D-65 light source
Viewing angle: 10°
Measurement mode: SCI

The sintered body sample used had a disc shape with a diameter of 20 mm and a thickness of 1.8 mm. One surface of the sintered body sample was mirror-polished (Ra ≤ 0.02 μm), and the color was evaluated using the surface as the evaluation surface. The effective area for evaluating the color was an area with a diameter of 10 mm.

Example 1

A hydrated zirconia sol was prepared by hydrolyzing an aqueous zirconium oxychloride solution. Yttrium chloride hexahydrate was added to and mixed with the hydrated zirconia sol such that an yttrium concentration of 1.0 mol% could be achieved. After the mixing, the mixture was dried in an air atmosphere and then calcined in an air atmosphere at 1000°C for 2 hours to give a calcined powder of an yttrium-stabilized zirconia. The resulting calcined powder was washed with purified water, and subsequently, a germanium oxide powder was added to and wet-mixed with the calcined powder such that a germanium oxide concentration of 2.4 mol% could be achieved. Accordingly, a mixed powder was prepared. The mixed powder was dried in an air atmosphere and then calcined in an air atmosphere at 800°C for 2 hours to give a zirconia powder made of a germanium oxide-containing yttrium-stabilized zirconia.
Purified water containing hydrochloric acid, which was added thereto such that the pH of the water became 2, was added to the prepared zirconia powder to form a slurry, and the slurry was subjected to grinding and mixing for 24 hours in a ball mill that used zirconia balls as grinding media. After the grinding and mixing, the slurry was dried in an air atmosphere at 110°C and then sieved to remove coarse particles having an agglomerate size of greater than 180 $\mu$m. In this manner, a powder made of a germanium oxide-containing yttrium-stabilized zirconia and having a germanium oxide content of 2.4 mol% and an yttrium oxide content of 1.0 mol% was prepared.

The powder of the present Example was subjected to uniaxial pressing at a pressure of 50 MPa and a cold isostatic pressing (CIP) process at a pressure of 196 MPa to give a green body. The resulting green body was calcined under the following conditions.

    Calcination method: pressureless calcination
    Calcination atmosphere: air atmosphere
    Calcination temperature: 700°C
    Calcination time: 1 hour

Subsequently, sintering was performed under the following conditions, and, accordingly, a sintered body of the present Example was prepared. The sintered body was made of a germanium oxide-containing yttrium-stabilized zirconia and had a germanium oxide content of 2.4 mol% and an yttrium oxide content of 1.0 mol%. The sintering conditions are shown below.

    Sintering method: pressureless sintering
    Sintering atmosphere: air atmosphere
    Sintering temperature: 1300°C
    Sintering time: 2 hours

Example 2:

A powder containing a germanium oxide-containing yttrium-stabilized zirconia was prepared in a manner similar to that of Example 1, except that the amount of the germanium oxide added was 2.0 mol%, and 10 mass% of an alumina powder was mixed with the slurry for the grinding and mixing. In the prepared powder, alumina was present in an amount of 10 mass% based on the mass of the zirconia, which had a germanium oxide content of 2.0 mol% and an yttrium oxide content of 1.0 mol%.

A sintered body of the present Example was prepared in a manner similar to that of Example 1, except that the powder just described was used, and the sintering temperature was 1350°C.

Example 3

A powder containing a germanium oxide-containing yttrium-stabilized zirconia was prepared in a manner similar to that of Example 1, except that the amount of the germanium oxide added was 2.0 mol%, and 20 mass% of an alumina powder was mixed with the slurry for the grinding and mixing. In the prepared powder, alumina was present in an amount of 20 mass% based on the mass of the zirconia, which had a germanium oxide content of 2.0 mol% and an yttrium oxide content of 1.0 mol%.

A sintered body of the present Example was prepared in a manner similar to that of Example 1, except that the powder just described was used, and the sintering temperature was 1400°C.

Example 4

A hydrated zirconia sol was prepared by hydrolyzing an aqueous zirconium oxychloride solution. Yttrium chloride hexahydrate was added to and mixed with the hydrated zirconia sol such that an yttrium concentration of 1.2 mol% could be achieved. After the mixing, the mixture was dried in an air atmosphere and then calcined in an air atmosphere at 1000°C for 2 hours to give a calcined powder of an yttrium-stabilized zirconia.

1.1 mol% germanium oxide, 10 mass% alumina based on a total mass of solids and purified water containing hydrochloric acid, which was added thereto such that the pH of the water became 2, were added to the prepared zirconia powder to form a slurry, and the slurry was subjected to grinding and mixing for 24 hours in a ball mill that used zirconia balls as grinding media. After the grinding and mixing, the slurry was dried in an air atmosphere at 110°C and then sieved to remove coarse particles having an agglomerate size of greater than 180 $\mu$m. In this manner, a powder containing a germanium oxide-containing yttrium-stabilized zirconia was prepared. In the prepared powder, alumina was present in an amount of 10 mass% based on the mass of the zirconia, which had a germanium oxide content of 1.1 mol% and an yttrium oxide content of 1.2 mol%.

A sintered body of the present Example was prepared in a manner similar to that of Example 1, except that the powder just described was used.

Example 5

A powder containing a germanium oxide-containing gadolinium-stabilized zirconia was prepared in a manner similar to that of Example 1, except that 1.2 mol% gadolinium chloride was added instead of yttrium chloride, the amount of the germanium oxide added was 1.8 mol% and 10 mass% of an alumina powder was mixed with the slurry for the grinding and mixing. In the prepared powder, alumina was present in an amount of 10 mass% based on the mass of the zirconia, which had a germanium oxide content of 1.8 mol% and a gadolinium oxide content of 1.2 mol%.

A sintered body of the present Example was prepared in a manner similar to that of Example 1, except that the powder just described was used, and the sintering temperature was 1350°C.

Example 6

A powder containing a germanium oxide-containing gadolinium-stabilized zirconia was prepared in a manner similar to that of Example 3, except that 1.2 mol% gadolinium chloride was added instead of yttrium chloride, and the amount of the germanium oxide added was 1.2 mol%. In the prepared powder, alumina was present in an amount of 10 mass% based on the mass of the zirconia, which had a germanium oxide content of 1.2 mol% and a gadolinium oxide content of 1.2 mol%.

A sintered body of the present Example was prepared in a manner similar to that of Example 1, except that the powder just described was used.

Example 7

A powder containing a germanium oxide-containing gadolinium-stabilized zirconia was prepared in a manner similar to that of Example 4, except that yttrium chloride hexahydrate was added such that an yttrium concentration of 1.5 mol% could be achieved, the amount of the germanium oxide added was 0.7 mol% and the amount of the alumina added was 0.25 mass%. In the prepared powder, alumina was present in an amount of 0.25 w mass% based on the mass of the zirconia, which had a germanium oxide content of 0.7 mol% and an yttrium content of 1.5 mol%.

A sintered body 1 of the present Example was prepared in a manner similar to that of Example 1, except that the powder just described was used, and the sintering temperature was 1250°C. In addition, a sintered body 2 of the present Example was prepared in a manner similar to that just described, except that the sintering temperature was 1450°C. The two types of sintered bodies 1 and 2, which were prepared from the powder of the present Example, are indicated as Example 7-1 and Example 7-2, respectively, in Table 2, shown below.

Comparative Example 1

A zirconia powder made of an yttrium-stabilized zirconia having an yttrium oxide content of 2.0 mol% was prepared in a manner similar to that of Example 1, except that yttrium chloride hexahydrate was added such that an yttrium concentration of 2.0 mol% could be achieved, and no germanium oxide was added.

A sintered body of the present Comparative Example was prepared in a manner similar to that of Example 1, except that the powder just described was used, and the sintering temperature was 1450°C.

Comparative Example 2

A zirconia powder made of a cerium-and-yttrium-stabilized zirconia having an yttrium oxide content of 1.0 mol% and a cerium oxide content of 4.0 mol% was prepared in a manner similar to that of Example 1, except that cerium chloride heptahydrate was added such that a ceria concentration of 4.0 mol% could be achieved, and no germanium oxide was added.

A sintered body of the present Comparative Example was prepared in a manner similar to that of Example 1, except that the powder just described was used, and the sintering temperature was 1450°C.

Comparative Example 3

A powder containing a germanium oxide-containing yttrium-stabilized zirconia was prepared in a manner similar to that of Example 4, except that yttrium chloride hexahydrate was added such that an yttrium concentration of 3.0 mol% could be achieved, the amount of the germanium oxide added was 0.3 mol% and the amount of the alumina added was 0.25 mass%. In the prepared powder, alumina was present in an amount of 0.25 mass% based on the mass of the zirconia, which had a germanium oxide content of 0.3 mol% and an yttrium oxide content of 3.0 mol%.

A sintered body of the present Example was prepared in a manner similar to that of Example 1, except that the powder just described was used, and the sintering temperature was 1200°C.

The compositions of the sintered bodies of the Examples and the Comparative Examples are shown in Table 1, and the evaluation results are shown in Table 2.

[Table 1]

| | Stabilizing Element [mol%] | | | | GeO2(Y) [mol%] | Y/X | X+Y [mol%] | Al2O3 [wt%] |
|---|---|---|---|---|---|---|---|---|
| | Y2O3 | Gd2O3 | CeO2 | Total (X) | | | | |
| Example 1 | 1.0 | - | - | 1.0 | 2.4 | 2.4 | 3.4 | 0 |
| Example 2 | 1.0 | - | - | 1.0 | 2.0 | 2.0 | 3.0 | 10 |
| Example 3 | 1.0 | - | - | 1.0 | 2.0 | 2.0 | 3.0 | 20 |
| Example 4 | 1.2 | - | - | 1.2 | 1.1 | 0.9 | 2.3 | 10 |
| Example 5 | - | 1.2 | - | 1.2 | 1.8 | 1.5 | 1.2 | 10 |
| Example 6 | - | 1.2 | - | 1.2 | 1.2 | 1.0 | 1.2 | 10 |
| Example 7 | 1.5 | - | - | 1.5 | 0.7 | 0.5 | 1.2 | 0.25 |
| Comparative Example 1 | 2.0 | - | - | 2.0 | - | 0.0 | 2.0 | - |
| Comparative Example 2 | 1.0 | - | 4.0 | 5.0 | - | 0.0 | 5.0 | - |
| Comparative Example 3 | 3.0 | - | - | 3.0 | 0.3 | 0.1 | 3.3 | 0.25 |
| Example 1 | 1.0 | - | - | 1.0 | 2.4 | 2.4 | 3.4 | 0 |
| Example 2 | 1.0 | - | - | 1.0 | 2.0 | 2.0 | 3.0 | 10 |
| Example 3 | 1.0 | - | - | 1.0 | 2.0 | 2.0 | 3.0 | 20 |
| Example 4 | 1.2 | - | - | 1.2 | 1.1 | 0.9 | 2.3 | 10 |
| Example 5 | - | 1.2 | - | 1.2 | 1.8 | 1.5 | 1.2 | 10 |
| Example 6 | - | 1.2 | - | 1.2 | 1.2 | 1.0 | 1.2 | 10 |
| Example 7 | 1.5 | - | - | 1.5 | 0.7 | 0.5 | 1.2 | 0.25 |
| Comparative Example 1 | 2.0 | - | - | 2.0 | - | 0.0 | 2.0 | - |
| Comparative Example 2 | 1.0 | - | 4.0 | 5.0 | - | 0.0 | 5.0 | - |
| Comparative Example 3 | 3.0 | - | - | 3.0 | 0.3 | 0.1 | 3.3 | 0.25 |

Referring to the table, it can be seen that in Examples 1 to 7, the powders contained germanium oxide and that the ratio (Y/X) of the germanium oxide content to the stabilizing element content in the zirconia powders was greater than or equal to 0.35.

[Table 2]

| | Sintering Temperature | Color (D65 light source) | | | | | Formation of impact Mark | Tetragonal Phase Fraction | Ball Drop Strength | Fracture Toughness |
|---|---|---|---|---|---|---|---|---|---|---|
| | [°C] | L* | a* | b* | C* | Hue | | [vol.%] | [J] | [MPa·m0.5] |
| Example 1 | 1300 | 88.04 | -0.37 | 0.88 | 1.0 | white | ○ | 96.6 | 1.18 | 8.4 |
| Example 2 | 1350 | 97.00 | -0.40 | 1.81 | 1.9 | white | ○ | 86.5 | 3.92 | 13.1 |
| Example 3 | 1400 | 98.08 | -0.10 | 1.71 | 1.7 | white | ○ | 66.0 | 1.47 | 11.5 |
| Example 4 | 1300 | 98.66 | -0.08 | 0.01 | 0.1 | white | ○ | 90.4 | 2.20 | 12.8 |
| Example 5 | 1350 | 97.99 | -0.36 | 1.06 | 1.1 | white | ○ | 96.8 | 1.03 | 9.7 |
| Example 6 | 1300 | 97.94 | -0.31 | 1.05 | 1.1 | white | ○ | 90.8 | 2.45 | 12.5 |
| Example 7-1 | 1250 | 89.35 | -0.85 | -0.48 | 1.0 | white | ○ | 92.5 | 1.32 | 10.3 |
| Example 7-2 | 1450 | 86.82 | -0.85 | -0.33 | 0.9 | white | ○ | 92.5 | 1.47 | 11.0 |
| Comparative Example 1 | 1450 | 84.78 | -0.70 | -0.22 | 0.7 | white | × | 100 | 0.44 | 5.4 |
| Comparative Example 2 | 1450 | 84.93 | -3.76 | 24.21 | 24.5 | yellow | ○ | 94.4 | 1.72 | 12.9 |
| Comparative Example 3 | 1200 | 96.34 | -0.62 | -0.69 | 0.9 | white | × | 100 | 0.29 | 3.8 |

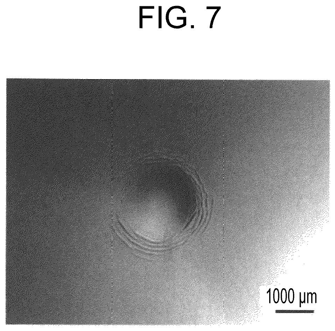

In the table, regarding the samples in the post-ball-drop-test conditions, those in which an impact mark could be observed were given a rating of "o", and those in which no impact marks could be observed were given a rating of "×", as indicated in the "Formation of Impact Mark" column. Fig. 7 shows an appearance of the sintered body of Example 2, which is an appearance after the ball drop test. In Fig. 7, it can be visually observed that the region with which the drop weight came into contact in the ball drop test had an impact mark (depressed portion) formed therein without fractures such as a crack being involved, that is, an impact mark (depressed portion) that was a mark of plastic deformation was present.

The sintered bodies of Examples 1 to 6 all had a tetragonal phase fraction of greater than 60% and, therefore, can be confirmed to have been made primarily of a tetragonal phase. Furthermore, an impact mark that was a mark of plastic deformation was visually observed, and a ball drop fracture energy was greater than or equal to 1.0 J. In these sintered bodies, an impact mark that was a mark of plastic deformation, as in Fig. 7, was visually observed.

It was confirmed that the sintered body of Comparative Example 1, which contained only yttrium as a stabilizing element, had a fracture toughness value and a ball drop fracture energy that were both lower than those of Examples 1 to 6.

Referring to the table, in Examples 1 to 6, the L* value was greater than or equal to 80, the absolute values of the a* value and the b* value were less than or equal to 5, and thus, a white color was exhibited. In the sintered body of Comparative Example 2, which contained $CeO_2$ as a stabilizing element, an impact mark that was a mark of plastic deformation was visually observed, and the ball drop fracture energy was high. However, the L* value was less than 80, the absolute values of the a* value and the b* value were greater than 5.0, and a yellow color derived from ceria was exhibited.

Thus, it was confirmed that the sintered bodies of the Examples all had high impact resistance and high fracture toughness and did not exhibit a color derived from ceria.

Example 8

A hydrated zirconia sol was prepared by hydrolyzing an aqueous zirconium oxychloride solution. Yttrium chloride hexahydrate was added to and mixed with the hydrated zirconia sol such that an yttrium concentration of 1.6 mol% could be achieved. After the mixing, the mixture was dried in an air atmosphere and then calcined in an air atmosphere at 1000°C for 2 hours to give a calcined powder of an yttrium-stabilized zirconia. The resulting calcined powder was washed with purified water, and subsequently, germanium oxide, alumina and cobalt oxide were added to the calcined powder such that a germanium oxide concentration of 1.0 mol%, an alumina content of 0.25 mass% and a cobalt oxide content of 1.0 mass% could be achieved. Purified water was then added to form a slurry, which was subsequently subjected to grinding and mixing in a ball mill that used zirconia balls as grinding media. After the grinding and mixing, the slurry was dried in an air atmosphere at 110°C and then sieved to remove coarse particles having an agglomerate size of greater than 180 μm. In this manner, a powder of the present Example, which contained a germanium oxide-containing yttrium-stabilized zirconia, was prepared. In the prepared powder, alumina was present in an amount of 0.25 mass%, and cobalt oxide in an amount of 1.0 mass%, based on the mass of the zirconia powder, which had a germanium oxide content of 1.0 mol% and an yttrium oxide content of 1.6 mol%.

The powder of the present Example was subjected to uniaxial pressing at a pressure of 50 MPa and a cold isostatic pressing (CIP) process at a pressure of 196 MPa to give a green body. The resulting green body was calcined under the following conditions to give a calcined body of the present Example.

Calcination method: pressureless calcination
Calcination atmosphere: air atmosphere
Calcination temperature: 700°C
Calcination time: 1 hour

Subsequently, sintering was performed under the following conditions, and, accordingly, a sintered body of the present Example was prepared. In the sintered body, alumina was present in an amount of 0.25 mass%, and cobalt oxide in an amount of 1.0 mass%, based on the mass of the zirconia, which had a germanium oxide content of 1.0 mol% and an yttrium oxide content of 1.6 mol%. The sintering conditions are shown below.

Sintering method: pressureless sintering
Sintering atmosphere: air atmosphere
Sintering temperature: 1400°C
Sintering time: 2 hours

Example 9

A powder and a calcined body of the present Example were prepared in a manner similar to that of Example 8, except that the amount of the germanium oxide added was 0.6 mol%, and iron oxide ($Fe_2O_3$) was used as a pigment component instead of cobalt oxide ($Co_3O_4$). In the prepared powder, alumina was present in an amount of 0.25 mass%, and iron oxide in an amount of 1.0 mass%, based on the mass of the zirconia, which had a germanium oxide content of 0.6 mol% and an yttrium oxide content of 1.6 mol%.

A sintered body of the present Example was prepared in a manner similar to that of Example 8, except that the powder just described was used, and the sintering temperature was 1350°C.

Example 10

A powder and a calcined body of the present Example were prepared in a manner similar to that of Example 7, except that yttrium chloride hexahydrate was added such that an yttrium concentration of 1.2 mol% could be achieved, the amount of the germanium oxide added was 1.2 mol%, no alumina was added and 0.5 mass% $CoAl_2O_4$ was used as a pigment component instead of cobalt oxide ($Co_3O_4$). In the prepared powder, $CoAl_2O_4$ was present in an amount of 0.5 mass%, based on the mass of the zirconia, which had a germanium oxide content of 1.2 mol% and an yttrium oxide content of 1.2 mol%.

A sintered body of the present Example was prepared in a manner similar to that of Example 8, except that the powder just described was used, and the sintering temperature was 1250°C.

Example 11

A powder, a calcined body and a sintered body of the present Example were prepared in a manner similar to that of Example 10, except that 0.03 mass% iron oxide ($Fe_2O_3$), in addition to $CoAl_2O_4$, was added as a pigment component, 10 mass% alumina was added and the amount of the $CoAl_2O_4$ added was 0.01 mass%. In the prepared powder, alumina was present in an amount of 10 mass%, iron oxide in an amount of 0.03 mass% and $CoAl_2O_4$ in an amount of 0.01 mass%, based on the mass of the zirconia powder, which had a germanium oxide content of 1.2 mol% and an yttrium oxide content of 1.2 mol%.

A sintered body of the present Example was prepared in a manner similar to that of Example 8, except that the powder just described was used, and the sintering temperature was 1250°C.

Example 12

A powder and a calcined body of the present Example were prepared in a manner similar to that of Example 10, except that yttrium chloride was added such that an yttrium concentration of 1.0 mol% could be achieved, and the amount of the germanium oxide added was 2.0 mol%. In the prepared powder, alumina was present in an amount of 10 mass%, iron oxide in an amount of 0.03 mass% and $CoAl_2O_4$ in an amount of 0.01 mass%, based on the mass of the zirconia, which had a germanium oxide content of 2.0 mol% and an yttrium oxide content of 1.0 mol%.

A sintered body of the present Example was prepared in a manner similar to that of Example 8, except that the powder just described was used, and the sintering temperature was 1250°C.

Example 13

A powder and a calcined body of the present Example were prepared in a manner similar to that of Example 9, except that gadolinium chloride was added instead of yttrium chloride such that a gadolinium concentration of 1.4 mol% could be achieved, and 1 mass% nickel oxide (NiO) was added instead of $CoAl_2O_4$. In the prepared powder, NiO was present in an amount of 1.0 mass% based on the mass of the zirconia, which had a germanium oxide content of 1.2 mol% and a gadolinium oxide content of 1.4 mol%.

A sintered body of the present Example was prepared in a manner similar to that of Example 8, except that the powder just described was used, and the sintering temperature was 1200°C.

Example 14

A powder and a calcined body of the present Example were prepared in a manner similar to that of Example 12, except that yttrium chloride was added in addition to gadolinium chloride such that an yttrium concentration of 0.4 mol% could be achieved, the amount of the germanium oxide added was 0.7 mol% and 1 mass% manganese oxide ($Mn_3O_4$) was added instead of nickel oxide. In the prepared powder, manganese oxide was present in an amount of 1.0 mass% based on the mass of the zirconia, which had a germanium oxide content of 0.7 mol%, an yttrium oxide content of 0.4 mol% and a gadolinium oxide content of 1.4 mol%.

A sintered body of the present Example was prepared in a manner similar to that of Example 8, except that the powder just described was used, and the sintering temperature was 1200°C.

Example 15

A powder and a calcined body of the present Example were prepared in a manner similar to that of Example 14, except that the amount of the germanium oxide added was 1.2 mol%, and 10 mass% alumina, 0.3 mass% iron oxide and 0.3 mass% cobalt oxide were added in addition to 1 mass% manganese oxide. In the prepared powder, alumina was present in an amount of 10 mass%, iron oxide in an amount of 0.3 mass%, manganese oxide in an amount of 1.0 mass% and cobalt oxide in an amount of 0.3 mass%, based on the mass of the zirconia, which had a germanium oxide content of 1.2 mol%, an yttrium oxide content of 0.4 mol% and a gadolinium oxide content of 1.4 mol%.

A sintered body of the present Example was prepared in a manner similar to that of Example 8, except that the powder just described was used, and the sintering temperature was 1350°C.

Example 16

A powder and a calcined body of the present Example were prepared in a manner similar to that of Example 15, except that yttrium chloride was added such that an yttrium concentration of 1.6 mol% could be achieved, no gadolinium chloride was added and the amount of the germanium oxide added was 0.6 mol%. In the prepared powder, alumina was present in an amount of 10 mass%, iron oxide in an amount of 0.3 mass%, manganese oxide in an amount of 1.0 mass% and cobalt oxide in an amount of 0.3 mass%, based on the mass of the zirconia, which had a germanium oxide content of 0.6 mol% and an yttrium oxide content of 1.6 mol%.

A sintered body of the present Example was prepared in a manner similar to that of Example 8, except that the powder just described was used.

Example 17

A powder and a calcined body of the present Example were prepared in a manner similar to that of Example 8, except that yttrium chloride was added such that an yttrium concentration of 2.0 mol% could be achieved, the amount of the germanium oxide added was 0.8 mol% and 0.01 mass% iron oxide, 0.5 mass% manganese oxide and 0.6 mass% $CoAl_2O_4$ were added instead of 1 mass% cobalt oxide. In the prepared powder, alumina was present in an amount of 0.25 mass%, iron oxide in an amount of 0.01 mass%, manganese oxide in an amount of 0.5 mass% and $CoAl_2O_4$ in an amount of 0.6 mass%, based on the mass of the zirconia, which had a germanium oxide content of 0.8 mol% and an yttrium oxide content of 2.0 mol%.

A sintered body of the present Example was prepared in a manner similar to that of Example 8, except that the powder just described was used, and the sintering temperature was 1450°C.

The compositions of the sintered bodies of the Examples and the Comparative Examples are shown in Table 3, and the evaluation results are shown in Table 4.

[Table 3]

| | Stabilizing Element [mol%] | | | GeO2 [mol%] | Y/X | X+Y [mol%] | Al2O3 wt%] | Pigment [wt%] | | | | |
|---|---|---|---|---|---|---|---|---|---|---|---|---|
| | Y2O3 | Gd2O3 | CeO2 | | | | | Fe2O3 | NiO | Mn3O4 | Co3O4 | CoAl2O4 |
| Example 8 | 1.6 | - | - | 1.0 | 0.63 | 1.6 | 0.25 | - | - | - | 1 | - |
| Example 9 | 1.6 | - | - | 0.6 | 0.38 | 1.6 | 0.25 | 1.0 | - | - | - | - |
| Example 10 | 1.2 | - | - | 1.2 | 1.0 | 2.4 | 0 | - | - | - | - | 0.5 |
| Example 11 | 1.2 | - | - | 1.2 | 1.0 | 1.2 | 10 | 0.03 | - | - | - | 0.01 |
| Example 12 | 1.0 | - | - | 2.0 | 2.0 | 1.0 | 10 | 0.03 | - | - | - | 0.01 |
| Example 13 | - | 1.4 | - | 1.2 | 0.86 | 1.4 | 0 | - | 1.0 | - | - | - |
| Example 14 | 0.4 | 1.4 | - | 0.7 | 0.39 | 1.8 | 0 | - | - | 1.0 | - | - |
| Example 15 | 0.4 | 1.4 | - | 1.2 | 0.67 | 1.8 | 10 | 0.3 | - | 1.0 | 0.3 | - |
| Example 16 | 1.6 | - | - | 0.6 | 0.38 | 1.6 | 10 | 0.3 | - | 1.0 | 0.3 | - |
| Example 17 | 2.0 | - | - | 0.8 | 0.4 | 2.0 | 0.25 | 0.01 | - | 0.5 | - | 0.6 |

Referring to the table, it can be seen that in Examples 8 to 17, the powders contained germanium oxide and that the ratio (Y/X) of the germanium oxide content to the stabilizing element content in the zirconia powders was greater than or equal to 0.35, as with the powders listed in Table 1.

[Table 4]

| | Sintering Temperature | Color | | | | Formation of impact Mark | Tetragonal Phase Fraction | Ball Drop Strength | Fracture Toughness |
|---|---|---|---|---|---|---|---|---|---|
| | [°C] | L* | a* | b* | Hue | | [vol.%] | [J] | [MPa·m$^{0.5}$] |
| Example 8 | 1400 | 45.46 | -0.98 | -0.94 | navy blue | ○ | 88.7 | 2.45 | 10.8 |
| Example 9 | 1350 | 49.01 | 5.2 | 4.48 | brown | ○ | 98.4 | 1.03 | 6.4 |
| Example 10 | 1250 | 52.61 | -3.36 | -18.36 | blue | ○ | 95.5 | 2.45 | 11.0 |
| Example 11 | 1250 | 95.62 | 0.09 | 2.01 | light gray | ○ | 96.0 | 1.47 | 9.6 |
| Example 12 | 1350 | 95.17 | 0.32 | 2.05 | light gray | ○ | 93.9 | 2.94 | 10.2 |
| Example 13 | 1200 | 75.79 | -7.61 | 9.57 | green | ○ | 84.6 | 1.32 | 10.4 |
| Example 14 | 1200 | 45.25 | 0.17 | -0.78 | black | ○ | 78.0 | 1.03 | 6.5 |
| Example 15 | 1350 | 51.18 | -0.74 | 1.01 | dark gray | ○ | 69.0 | 1.32 | 9.0 |
| Example 16 | 1400 | 49.67 | -0.19 | 1.75 | dark gray | ○ | 90.4 | 1.72 | 10.2 |
| Example 17 | 1450 | 46.23 | -0.22 | -2.22 | dark navy blue | ○ | 95.0 | 1.18 | 7.6 |

Referring to the table, it can be seen that in Examples 8 to 17, the sintered bodies had a color different from white as a result of the addition of one or more pigment components, and that a desired color was exhibited without an influence of a color derived from ceria. Furthermore, in the sintered bodies of Examples 8 to 17, an impact mark that was a mark of plastic deformation was visually observed, and a ball drop fracture energy was greater than or equal to 1.0 J.

The entire content of the specification, claims, drawings and abstract of Japanese Patent Application No. 2021-212807, filed on December 27, 2021, is incorporated herein by reference and incorporated as a disclosure of the specification of the present disclosure.

REFERENCE SYMBOLS

| 100 | schematic external view of ball drop test |
|---|---|
| 101 | sintered body |
| 102 | punch |
| 103a, 103b | guide |
| 104 | drop weight |

| 105 | securing tape |
|---|---|
| 106 | sample stage of impact tester |
| 107 | protective tape |
| 200 | sintered body of present embodiment after ball drop test |
| 201 | sintered body |
| 202 | impact mark (depressed portion) |
| 203 | depth of impact mark (depressed portion) |
| 300 | sintered body of related art after ball drop test |
| 301 | sintered body |
| 302 | defect (crack) |
| 400 | view of sintered body placed on sample stage of impact tester |
| 401 | sintered body |
| 402 | securing tape |
| 403 | sample stage of impact tester |
| 404 | double-sided tape (protective tape) |
| 500 | diagram illustrating method for measuring depth of impact mark |
| 501 | sintered body |
| 502 | impact mark (depressed portion) |
| 503A, B | line profile |
| 504 | depth of impact mark |
| 601 | sintered body that has broken into pieces |
| 602 | defect (crack) |
| 702 | impact mark (depressed portion) |

**Claims**

1. A sintered body comprising:

   zirconia that contains a stabilizing element; and
   germanium oxide, wherein
   Y/X is 0.35 or greater, and X+Y is 4.0 or less,
   where X is an amount of the stabilizing element in the zirconia expressed in mol%, and Y is an amount of the germanium oxide in the zirconia expressed in mol%.

2. The sintered body according to claim 1, wherein when a load is applied to the sintered body, the sintered body undergoes plastic deformation.

3. The sintered body according to claim 1 or 2, wherein a content of the germanium oxide is 0.1 mol% or greater and less than 4.0 mol%.

4. The sintered body according to any one of claims 1 to 3, wherein the stabilizing element includes at least one selected from the group of yttrium, calcium, magnesium, ytterbium and gadolinium.

5. The sintered body according to any one of claims 1 to 4, wherein the content of the stabilizing element is 0.1 mol% or greater and 4.0 mol% or less.

6. The sintered body according to any one of claims 1 to 5, wherein a fracture toughness value is 6.0 MPa·m$^{0.5}$ or greater as measured by a method that is in accordance with an SEPB method specified in JIS R 1607.

7. The sintered body according to any one of claims 1 to 6, further comprising alumina.

8. A powder comprising:

   zirconia that contains a stabilizing element; and
   germanium oxide, wherein
   regarding the zirconia, Y/X is 0.35 or greater, and X+Y is 4.0 or less,
   where X is an amount of the stabilizing element in the zirconia expressed in mol%, and Y is an amount of the germanium oxide in the zirconia expressed in mol%.

9. A calcined body comprising:

   zirconia that contains a stabilizing element; and
   germanium oxide, wherein
   regarding the zirconia, Y/X is 0.35 or greater, and X+Y is 4.0 or less,
   where X is an amount of the stabilizing element in the zirconia expressed in mol%, and Y is an amount of the germanium oxide in the zirconia expressed in mol%.

10. A method for producing the sintered body according to any one of claims 1 to 7 comprising sintering the powder according to claim 8 at a temperature of 1100°C or greater and 1500°C or less for a time of 0.3 hours or more and 20 hours or less.

11. A component comprising the sintered body according to any one of claims 1 to 7.

FIG. 1

<u>100</u>

FIG. 2

<u>200</u>

FIG. 3

<u>300</u>

FIG. 4

FIG. 5

FIG. 6

(a)

(b)

FIG. 7

1000 μm

## INTERNATIONAL SEARCH REPORT

| International application No. |
| --- |
| **PCT/JP2022/048288** |

### A. CLASSIFICATION OF SUBJECT MATTER

*C04B 35/488*(2006.01)i; *C01G 25/00*(2006.01)i; *C01G 25/02*(2006.01)i; *C04B 35/48*(2006.01)i
FI:   C04B35/488; C01G25/00; C04B35/48; C01G25/02

According to International Patent Classification (IPC) or to both national classification and IPC

### B. FIELDS SEARCHED

Minimum documentation searched (classification system followed by classification symbols)

C04B35/488; C01G25/00; C01G25/02; C04B35/48

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JST7580/JSTChina (JDreamIII)

### C. DOCUMENTS CONSIDERED TO BE RELEVANT

| Category* | Citation of document, with indication, where appropriate, of the relevant passages | Relevant to claim No. |
| --- | --- | --- |
| A | WO 2021/215419 A1 (TOSOH CORP) 28 October 2021 (2021-10-28)<br>    claims 1, 5, paragraphs [0030]-[0036], [0108]-[0112] | 1-11 |
| A | JP 2021-091602 A (TOSOH CORP) 17 June 2021 (2021-06-17)<br>    claims 1-13 | 1-11 |
| A | JP 2021-088501 A (TOSOH CORP) 10 June 2021 (2021-06-10)<br>    claim 1 | 1-11 |
| A | JP 4-349172 A (NISSAN CHEMICAL IND LTD) 03 December 1992 (1992-12-03)<br>    claim 1 | 1-11 |

☐ Further documents are listed in the continuation of Box C.      ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **16 February 2023** | **28 February 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/048288**

| Patent document cited in search report | | | Publication date (day/month/year) | Patent family member(s) | | | Publication date (day/month/year) |
|---|---|---|---|---|---|---|---|
| WO | 2021/215419 | A1 | 28 October 2021 | JP 2022-8052 A claims 1, 5, paragraphs [0030]-[0036], [0108]-[0112] | | | |
| JP | 2021-091602 | A | 17 June 2021 | WO 2021/117720 A1 claim 1-12 EP 4074674 A1 claim 1-12 CN 114787103 A | | | |
| JP | 2021-088501 | A | 10 June 2021 | US 2022/0212999 A1 claim 1 WO 2020/217942 A1 EP 3960721 A1 CN 113727957 A | | | |
| JP | 4-349172 | A | 03 December 1992 | US 5279995 A claim 1 EP 467346 A1 | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021091601 A

- JP 2021212807 A